# EUROPEAN PATENT SPECIFICATION

(11) **EP 3 799 982 B1**
(45) Date of publication and mention of the grant of the patent: **21.02.2024**
(21) Application number: 20190185.7
(22) Date of filing: 10.08.2020
(51) Int. Cl.: B23K 9/095, B23K 9/10, B23K 9/32, G01S 13/00

(54) **SYSTEM FOR AND METHOD OF WELDING ASSET TRACKING USING A WELDING ASSET REPOSITORY**
SYSTEM UND VERFAHREN ZUR VERFOLGUNG VON SCHWEISSGÜTERN UNTER VERWENDUNG EINES SCHWEISSGUTLAGERS
SYSTÈME ET PROCÉDÉ DE SUIVI D'ACTIFS DE SOUDAGE À L'AIDE D'UN RÉFÉRENTIEL D'ACTIFS DE SOUDAGE

(30) Priority: 16.08.2019 US 201962888198 P; 22.07.2020 US 202016935357
(43) Date of publication of application: 07.04.2021
(73) Proprietor: Illinois Tool Works Inc., Glenview, IL 60025 (US)
(72) Inventor: RAPPL, James Francis, Glenview, Illinois 60025 (US); HOLVERSON, Todd, Glenview, Illinois 60025 (US)
(74) Representative: HGF

(56) References cited:
- KR-A- 20090 128 646
- US-A1- 2007 080 153
- US-A1- 2013 200 055
- US-A1- 2019 070 686

## Description

The present disclosure generally relates to welding asset repository, a welding system with such repository, and a method of collecting welding data, see claims 1, 6 and 7.

### BACKGROUND

Numerous welding assets may be employed in large welding environments, such as construction sites, factories, manufacturing yards, and shipyards. As welding assets of similar types can be difficult to distinguish from one another, locating a particular welding asset in a large welding environment, or across multiple welding environments, can be difficult and time consuming. Additionally, lost, misplaced, and/or stolen welding assets can be costly to replace. Further, reallocating welding assets from one welding job to another, without first knowing if and/or how the welding assets are being used, can be inefficient.

US 2019/070686 A1 (starting point for the present invention) describes a welding wire docking station including a loading platform, an RFID reader, a scale, a sensor, and a communication device. The loading platform of the welding wire docking station is loaded with a source of consumable welding wire in the form of a drum, box or spool of welding wire.

KR 2009 0128646 A describes a baggage guide system using an RFID. This guide system is provided to easily manage delivery of articles by guiding a location of the article kept in a warehouse based on information stored in the RFID, which is attached to the article.

Limitations and disadvantages of conventional and traditional approaches will become apparent to one of skill in the art, through comparison of such systems with the present disclosure as set forth in the remainder of the present application with reference to the drawings.

### BRIEF SUMMARY

A welding asset repository, a welding system with such repository, and a method of collecting welding data according to the present invention are defined in claims 1, 6 and 7 respectively.

Further embodiments of the present invention are defined in the appended claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 depicts a welding asset tracking system, in accordance with aspects of this disclosure.
FIG. 2 shows examples of different welding assets that may be used with the welding asset tracking system of FIG. 1, in accordance with aspects of this disclosure.
FIG. 3 is a diagram illustrating an example welding area with components of the welding asset tracking system of FIG. 1, in accordance with aspects of this disclosure.
FIGS. 4a and 4b are flowcharts illustrating an example hub tracking program of the welding asset tracking system of FIG. 1, in accordance with aspects of this disclosure.
FIGS. 5a and 5b show examples of a welding asset repository that may be used with the welding asset tracking system of FIG. 1, in accordance with aspects of this disclosure.

The figures are not necessarily to scale. Where appropriate, the same or similar reference numerals are used in the figures to refer to similar or identical elements. For example, reference numerals utilizing lettering (e.g., sensor 106a, sensor 106b) refer to instances of the same reference numeral that does not have the lettering (e.g., sensors 106).

### DETAILED DESCRIPTION

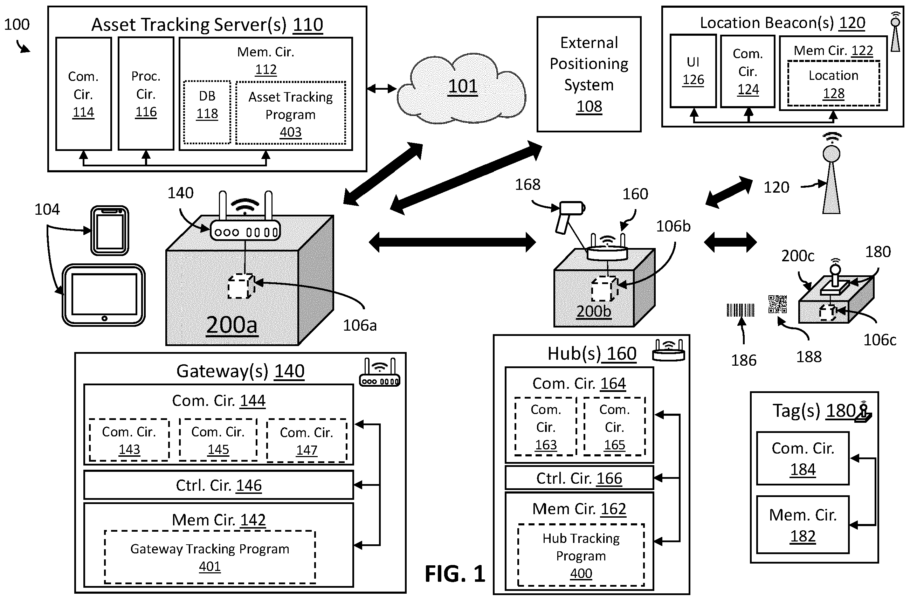

FIG. 1 shows an example of a welding asset tracking system 100. As shown, the welding asset tracking system 100 includes an asset tracking server 110, a local positioning system comprising one or more location beacons 120, and an asset tracking network comprising several welding assets 200 interconnected via one or more gateways 140, hubs 160, and/or tags 180. As shown, the gateway(s) 140, hub(s) 160, and/or tag(s) 180 are retained by the one or more welding assets 200. In some examples, one or more brackets, fasteners, housings, and/or other mechanisms may be used to retain the gateway(s) 140, hub(s) 160, and/or tag(s) 180 in and/or on the welding assets 200. In some examples, one or more mobile devices 104 (e.g., smartphones, tablet computers, laptop computers, etc.) configured for use with the welding asset tracking system 100 may also take on the role of a gateway 140. In some examples, one or more of the gateways 140, hubs 160, and/or tags 180 may not be retained by a welding asset 200.

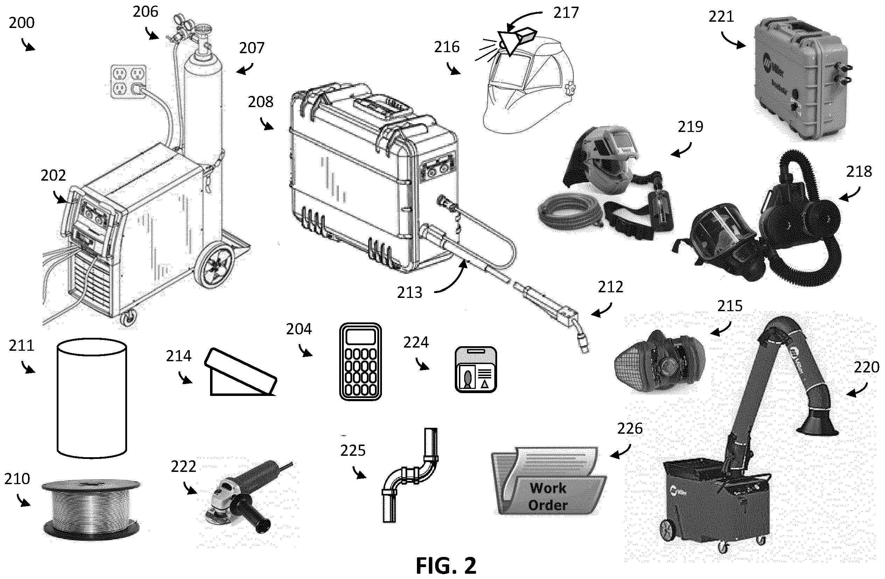

A welding asset 200, as used herein, may refer to any device, equipment, accessory, and/or tool used for welding and/or welding-type activities (e.g., metal fabrication, induction heating, grinding, polishing, plasma cutting, etc.). FIG. 2 shows several common examples of welding assets 200 that may be used with the welding asset tracking system 100. As shown, common welding assets 200 may include a welding (and/or welding-type) power supply 202, a power supply pendant 204, a gas bottle regulator 206, a gas bottle 207, a welding wire feeder 208, a wire spool 210, a wire barrel 211, a welding torch 212, a welding cable 213, a foot pedal 214, a respirator mask 215, a welding helmet 216, a light 217 (e.g., attached to, or separate from, the welding helmet 216), a powered air-purifying respirator (PAPR) 218, a supplied air respirator (SAR) 219, a fume extractor 220 (e.g., to extract welding fumes), a box filtration system 221, a grinder 222, an operator id badge 224, welding material 225 (e.g., welding workpiece(s)), and a welding work order 226 (e.g., affixed to a bin or pallet containing welding material 225, or the welding material 225 itself). In some examples, the welding torch 212 may be a welding gun or plasma torch. In some examples, the welding torch 212 may be robot and/or machine operated.

In the example of FIG. 1, each welding asset 200 includes one or more sensors 106. In some examples, the one or more sensors 106 may be configured to continuously and/or periodically sense, detect, measure, and/or record sensor data relating to the operation(s) (and/or error(s)) of that particular welding asset 200. For example, a welding power supply 202 may have one or more sensors 106 configured to sense, detect, measure, and/or record an input, intermediate, and/or output current and/or voltage, an arc time, a cooling airflow amount, a cooling device (e.g., fan) on time, a weld start/stop time, and/or a total energy amount outputted. As another example, a wire feeder 208 may have one or more sensors 106 configured to sense, detect, measure, and/or record a wire feed speed, a motor current, motor voltage, a cooling airflow amount, a cooling device (e.g., fan) on time, roller torque, roller speed, and/or a total amount of filler material output. As another example, a gas regulator 206 may have one or more sensors 106 configured to sense, detect, measure, and/or record gas flow rate, gas temperature, gas mixture, and/or total gas output. As another example, a welding helmet 216 may have one or more sensors 106 configured to sense, detect, measure, and/or record temperature in and/or around the welding helmet 216, air quality in and/or around the welding helmet 216, motion of the welding helmet 216, whether the helmet 216 is in a darkened state (e.g., for auto-darkening helmets), and/or the total amount of time spent in the darkened state (and/or undarkened state). As another example, a welding torch 212 may have one or more sensors 106 configured to sense, detect, measure, and/or record trigger activation start/stop time, activation duration, arc time, position (e.g., with respect to welding material 225 and/or a fixture), orientation (e.g., with respect to welding material 225 and/or a fixture), motion (e.g., with respect to welding material 225 and/or a fixture), current, and/or voltage. As another example, a foot pedal 214 may have one or more sensors 106 configured to sense, detect, measure, and/or record pedal activation start/stop time, activation duration, and/or activation pressure. As another example, a pendant 204 may have one or more sensors 106 configured to sense, detect, measure, and/or record a recent command history. As another example, an operator badge 224 may have one or more sensors 106 configured to sense, detect, measure, and/or record a scanning history (e.g., where the badge is scanned when entering/exiting certain areas and/or using certain assets). As another example, a PAPR 218 or fume extractor 220 may have one or more sensors 106 configured to sense, detect, measure, and/or record air circulation amounts, air quality, air temperature, and/or a condition of a filter.

In some examples, the one or more sensors 106 may detect and/or record a time corresponding to the sensing, detection, measurement, and/or recording of the sensor data. In some examples, one or more of the welding assets 200 may have no sensor 106. In some examples, a stand-alone sensor 106 configured to be removably attached to some third party (e.g., competitor) welding asset may be considered a welding asset 200 in and of itself. For example, a Hall Effect sensor or magnetic reed switch sensor configured to be attached to a welding cable and/or detect current through the welding cable may be fitted with its own tag 180, effectively making the sensor 106 itself a welding asset 200. As another example, an air flow sensor configured to be attached to a welding power supply 202 (e.g., within the interior and/or in fluid communication with external vents) may be configured to detect cooling air circulating through the welding power supply 202 and fitted with its own tag 180, effectively making the sensor 106 itself a welding asset 200.

In the example of FIG. 1, each sensor 106 has an electrical and/or communication link to a tag 180, hub 160, and/or gateway 140 retained by a welding asset 200. Through this link, sensor data sensed, detected, measured, and/or recorded by the sensor may be communicated to the tag 180, hub 160, and/or gateway 140 retained by the welding asset 200. As shown, the tag 180, hub 160, and gateway 140 have tag memory circuitry 182, hub memory circuitry 162, and gateway memory circuitry 142, respectively, configured to store the sensor data. In some examples, the tag memory circuitry 182, hub memory circuitry 162, and/or gateway memory circuitry 142 may also store a time corresponding to the detection, measurement, recordation, and/or reception of the sensor data. In some examples, the tag memory circuitry 182, hub memory circuitry 162, and/or gateway memory circuitry 142 may also store some other data related to the welding asset 200. The tag memory circuitry 182, hub memory circuitry 162, and/or gateway memory circuitry 142 may also store an identifier (e.g., serial number) that is unique within the welding asset tracking system 100 and/or associated with the welding asset 200 retaining the tag 180, hub 160, or gateway 140 (and/or associated with the tag 180, hub 160, or gateway 140 itself).

In some examples, smaller and/or less sophisticated welding assets 200c (e.g., wire spools 210, work orders 226, welding material 225, operator badges 224, welding guns 212, grinders 222, welding helmets 216, etc.), and/or welding assets 200c that change location frequently, may retain tags 180. In some examples, the tags 180 may be relatively cheap and/or simple devices and/or mechanisms. In the example of FIG. 1, the tag 180 includes tag communication circuitry 184 and tag memory circuitry 182 in electrical communication with one another. As discussed above, the tag memory circuitry 182 may store sensor data, one or more identifiers, and/or other data related to the retaining welding asset 200c. The tag communication circuitry 184 may be configured for shorter range communication, such as, for example, via a short wavelength ultra-high frequency protocol (commonly referred to as Bluetooth), an IEEE 802.15.4 standard protocol (commonly referred to as Zigbee), a near field communication (NFC) protocol, and/or a radio frequency identification (RFID) protocol. In some examples, the tag communication circuitry 184 may communicate data (i.e., tag data) stored in the tag memory circuitry 182 via the tag communication circuitry 184.

In some examples, a tag 180 may be so simple as to have no circuitry. For example, a simple welding asset 200 (e.g., wire spool) with no sensor 106 may record no dynamic data and/or have no need of dynamically updatable memory circuitry. In such an example, a tag 180 may be implemented via a (e.g., linear and/or one dimensional) barcode 186 or matrix (and/or two dimensional) barcode 188. In some examples, the tag 180 (and/or barcode 186 or matrix barcode 188) may be retained on an outside of the welding asset 200a or within a housing, chassis, cover, etc. of the welding asset 200a.

In some examples, moderately sized and/or moderately sophisticated welding assets 200b (e.g., welding helmets 216, wire feeders 208, power supplies 202), and/or welding assets 200 that only change location occasionally, may retain hubs 160. In some examples, the hubs 160 may be retained on an outside of welding assets 200b or within a housing, chassis, cover, etc. of the welding assets 200b. In some examples, the hub retaining welding assets 200b may have existing circuitry (e.g., memory, control, and/or communication circuitry) that can be supplemented relatively easily and/or cheaply to give the welding assets 200b capabilities of a hub 160.

In the example of FIG. 1, the hub 160 includes hub memory circuitry 162, hub control circuitry 166, and hub communication circuitry 164, in electrical communication with one another. In addition to identifiers and/or sensor data, the hub memory circuitry 162 is shown storing a hub tracking program 400 that guides the hub 160 in fulfilling its role in the welding asset tracking system 100, as discussed further below. The hub control circuitry 166 controls the operation of the hub 160 in accordance with the hub tracking program 400. In some examples, the hub control circuitry 166 may comprise one or more processors.

In the example of FIG. 1, the hub communication circuitry 164 includes short range hub communication circuitry 163. In some examples, the short range hub communication circuitry 163 may be configured for shorter range wireless communication, such as, for example, via a short wavelength ultra-high frequency protocol (commonly referred to as Bluetooth), an IEEE 802.15.4 standard protocol (commonly referred to as Zigbee), an NFC protocol, and/or an RFID protocol. In some examples, the hub 160 may obtain tag data from nearby tags 180 (and/or their tag communication circuitry 184 and/or tag memory circuitry 182) in communication range using the short range hub communication circuitry 163. In some examples, a hub 160 may be configured to only communicate with and/or obtain tag data from specific tags 180, specific welding assets 200, and/or specific types of welding assets 200 (e.g., based on identifier(s)).

In the example of FIG. 1, the hub 160 is linked to a barcode scanner 168 configured to obtain tag data from a barcode 186 and/or matrix barcode 188. In some examples, the hub 160 may use the barcode scanner 168 instead of, or in addition to, the short range hub communication circuitry 163 to obtain tag data. For example, a wire feeder 208 (comprising a welding asset 200b) may have a barcode scanner 168 positioned and/or configured to scan a barcode 186 or matrix barcode 188 imprinted on an outer portion of a wire spool 210 when the wire spool 210 is loaded into the wire feeder 208. In some examples, the hub 160 may store the tag data (as well as a corresponding time the tag data is sent and/or received) in hub memory circuitry 162.

In the example of FIG. 1, the hub communication circuitry 164 also includes long range hub communication circuitry 165. In some examples, the long range hub communication circuitry 165 may be configured for longer range wireless communications, such as, for example, via a cellular and/or IEEE 802.11 standard (commonly referred to as WiFi) protocol. As shown, the hub 160 may be in communication with one or more gateways 140 of the welding asset tracking system 100 via the long range hub communication circuitry 165. In some examples, the hub 160 may send tag data obtained from nearby tags 180 to one or more gateways 140 in communication with the hub 160 via the long range hub communication circuitry 165. In some examples, the hub 160 may additionally, or alternatively, send an identifier of the welding asset 200b (and/or hub 160), sensor data from the sensor 106b, and/or other data relating to the welding asset 200b to one or more gateways 140 in communication with the hub 160 via the long range hub communication circuitry 165. Collectively, this data may be referred to as hub data.

In some examples, the hub 160 may send tag data and/or hub data directly to the asset tracking server 110 via the long range hub communication circuitry 165. In some examples, the hub 160 may send the tag data and/or hub data to a second hub 160 of the welding asset tracking system 100, such as, for example, if the hub communication circuitry 164 is unable to establish communication with a gateway 140 and/or the asset tracking server 110. In such an example, the second hub 160 may either be in communication with a gateway 140 (in which case tag data and/or hub data may be sent to the gateway 140) or also unable to establish communication with a gateway 140. If the second hub 160 is also unable to establish communication with a gateway 140, the tag data and/or hub data may be forwarded to a third hub 160 (and so on and so on until the data arrives at a hub 160 in communication with a gateway 140).

In the example of FIG. 1, the gateway 140 is retained by a welding asset 200a. In some examples, larger and/or more sophisticated welding assets 200a (e.g., wire feeders 208, power supplies 202, etc.), and/or welding assets 200a that rarely change location significantly, may retain gateways 140. In some examples, the gateways 140 may be more sophisticated and/or expensive devices. Nevertheless, in some examples, the welding assets 200a may have existing circuitry that can be supplemented relatively easily and/or cheaply to give the welding asset 200a gateway capabilities.

In the example of FIG. 1, each gateway 140 includes gateway memory circuitry 142, gateway control circuitry 146, and gateway communication circuitry 144 in electrical communication with one another. In addition to identifiers and/or sensor data, the gateway memory circuitry 142 stores a gateway tracking program 401 that guides the gateway 140 in fulfilling its role in the welding asset tracking system 100, as discussed further below. The gateway control circuitry 146 controls the operation of the gateway 140 in accordance with the gateway tracking program 401. In some examples, the gateway control circuitry 146 may comprise one or more processors.

In the example of FIG. 1, the gateway communication circuitry 144 includes short range gateway communication circuitry 143. In some examples, the short range gateway communication circuitry 143 may be configured for shorter range wireless communication, such as, for example, via a short wavelength ultra-high frequency protocol (commonly referred to as Bluetooth), an IEEE 802.15.4 standard protocol (commonly referred to as Zigbee), an NFC protocol, and/or an RFID protocol. In some examples, the gateway 140 may obtain tag data from nearby tags 180 and/or hub data from nearby hubs 160 (in communication range using the short range gateway communication circuitry 143. Though not shown, in some examples, the gateway 140 may be linked to a barcode scanner 168 and obtain tag data from a barcode 186 and/or matrix barcode 188 using the barcode scanner 168. In some examples, the gateway 140 may store the tag data and/or hub data (as well as a corresponding time the tag/hub data is sent and/or received) in gateway memory circuitry 142.

In the example of FIG. 1, the gateway communication circuitry 144 also includes long range gateway communication circuitry 145. In some examples, the long range gateway communication circuitry 145 may be configured for longer range wireless communications, such as, for example, via a cellular and/or IEEE 802.11 standard (commonly referred to as WiFi) protocol. As shown, the gateway 140 may be in communication with one or more hubs 160 of the welding asset tracking system 100 via the long range gateway communication circuitry 145. In some examples, the gateway 140 may receive hub data (and/or asset identifiers, sensor data, timestamps, etc.) obtained from nearby hubs 160 via the long range gateway communication circuitry 145. In some examples, the gateway 140 may also communicate with other gateways 140 of the welding asset tracking system 100 via the gateway communication circuitry 144 (long and/or short range).

In the example of FIG. 1, the gateway 140 also includes global positioning system (GPS) communication circuitry 147. As shown, the gateway 140 is in communication with an external positioning system 108 (e.g., GPS, Wifi, and/or cellular positioning system). In some examples, the GPS communication circuitry 147 may enable communication with the external positioning system 108. In some examples, the external positioning system 108 may provide the gateway 140 with a position (e.g., latitude and/or longitude) of the gateway 140 and/or retaining welding asset 200a via the external positioning system 108 and/or GPS communication circuitry 147. In some examples, one or more hubs 160 may also have GPS communication circuitry 147 (and/or other appropriate communication circuitry) with which to communicate with, and/or obtain position information from, the external positioning system 108.

In the example of FIG. 1, the hubs 160 are in communication (e.g., via short range hub communication circuitry 163) with a local positioning system comprising one or more location beacons 120. In some examples, the gateways 140 may also be in communication (e.g., via short range gateway communication circuitry 143) with the local positioning system. In some examples, the local positioning system may be used to estimate and/or determine a (relative, local, and/or global) position of a gateway 140, hub 160, tag 180, and/or welding asset 200, such as, for example, in situations where the external positioning system 108 is unavailable, unreachable, and/or otherwise not an option. In some examples, multiple location beacons 120 may be positioned throughout a welding area to provide a dense, granular, and/or more precise local positioning system.

In the example of FIG. 1, the location beacon 120 of the local positioning system includes beacon memory circuitry 122, beacon communication circuitry 124, and a beacon user interface (UI) 126 in electrical communication with one another. As shown, the beacon memory circuitry 122 stores a location 128 of the beacon 120. This beacon location 128 may be a relative position (e.g., 100 feet NW of beacon 2, halfway between front door and western window, etc.), a local position (e.g., welding cell 5, back door, front wall, loading bay, etc.), and/or a global position (e.g., 41.8823° N, 87.6404° W). In some examples, the beacon location 128 may be entered and/or modified via the beacon UI 126. In some examples, the beacon location 128 may be entered and/or modified via a third party device (e.g., mobile device 104) in communication with the location beacon 120 (e.g., via beacon communication circuitry 124). In some examples, the beacon location 128 may be communicated to hubs 160 and/or gateways 140 in communication range via beacon communication circuitry 124.

In some examples, a maximum communication range of the beacon communication circuitry 124 may be reduced to a set communication range. This reduction may be achieved via beacon UI 126 and/or third party device in communication with the beacon communication circuitry 124, for example. In some examples, the maximum communication range and/or set communication range may be stored in the beacon memory circuitry 122, and/or accessed when determining position.

In some examples, the hubs 160 and/or gateways 140 of the welding asset tracking system 100 may determine their positions via the external positioning system 108 and/or local positioning system. For example, a gateway 140 in communication with the external positioning system 108 may determine its global position via GPS communication circuitry 147, and send this position to the asset tracking server(s) 110. Thereafter, the asset tracking server 110 (and/or the gateway 140 itself) may determine and/or estimate a position of any gateways 140, hubs 160, and/or tags 180 for which the gateway 140 has obtained (and/or communicated) data. As another example, a hub 160 that cannot access the external positioning system 108 may nonetheless access one or more location beacons 120 of the local positioning system and thereby estimate and/or determine its position based on the beacon locations 128 of the location beacons 120. Thereafter, the asset tracking server 110 (and/or hub 160 itself or some gateway 140) may determine and/or estimate a position of any hubs 160 and/or tags 180 for which the hub 160 has obtained (and/or communicated) data.

In some examples, the determination and/or estimation of position may include a position radius and/or a zone of uncertainty (e.g., position within 50 meters of gateway 12, or somewhere within facility 13). In some examples, the position determination and/or estimation may be made more accurate and/or precise by using multiple location beacons 120 in combination with trilateration and/or triangulation methods. In some examples, the position determination and/or estimation may be made more accurate and/or precise by using other factors (e.g., the communication range, signal strength, signal time of flight, etc.). In some examples, the position information of the external positioning system 108 and local positioning system may be combine to more accurately and/or precisely determine position.

In some examples, one or more gateways 140, hubs 160, tags 180, and/or sensors 106 may have their position stored in their own respective memory circuitry, so that position may be determined without resorting to an external positioning system. In some examples, the gateways 140, hubs 160, tags 180, and/or sensors 106 may also be setup, updated, paired, and/or otherwise configured with position information (and/or other information) via a third party device (e.g., mobile device 104) in communication with the gateway 140, hub 160, tag 180, and/or sensor 106. In some examples, the gateways 140, hubs 160, tags 180, and/or sensors 106 retained by welding assets 200 may be setup, paired, and/or otherwise configured via an interface of the retaining welding asset 200.

In the example of FIG. 1, the gateway 140 is also in communication with one or more asset tracking server(s) 110 through a network 101 (e.g., local area network, wide area network, internet, etc.). In some examples, the gateway 140 may be in communication with the asset tracking server(s) 110 directly, without going through the network 101. In some examples, the gateway communication circuitry 144 (e.g., the long range gateway communication circuitry 145) may be configured to facilitate communication with the asset tracking server(s) 110 and/or network 101. In some examples, the asset tracking server(s) 110 may be implemented in one or more gateways 140.

In some examples, the gateways 140 may send information obtained from other gateways 140, hubs 160, and/or tags 180 to the asset tracking server(s) 110. In some examples, one or more hubs 160 may also be in communication with the asset tracking server(s) 110, and/or send information obtained from other hubs 160, and/or tags 180 to the asset tracking server(s) 110 without going through the gateway(s) 140. In some examples, one or more mobile devices 104 configured for use with the welding asset tracking system 100 may also take on the role of gateways 140 and send information obtained from other gateways 140, hubs 160, and/or tags 180 to the asset tracking server(s) 110. For example, one or more welding operators, administrators, maintenance workers, technicians, etc. may carry mobile devices 104 configured to act as mobile gateways 140 with the welding asset tracking system 100. In such an example, the mobile gateways 140 may obtain hub and/or tag data (and/or gateway data) when in proximity to gateways 140, hubs 160, and/or tags, and send the data to the asset tracking server(s) 110.

In the example of FIG. 1, the one or more asset tracking servers 110 include server communication circuitry 114, server processing circuitry 116, and server memory circuitry 112 in electrical communication with one another. In some examples, only one asset tracking server 110 may be used. In some examples, multiple asset tracking servers 110 may be used. As shown, the one or more asset tracking servers 110 are in communication with one or more gateways 140 through the network 101. In some examples, the asset tracking server(s) 110 may be in communication with one or more hubs 160 as well. In some examples, the asset tracking server(s) 110 may be in communication with the one or more gateways 140 and/or hubs 160 directly, without going through the network 101. In some examples, the server communication circuitry 114 may facilitate communication with the network 101, gateways 140, and/or hubs 160.

In the example of FIG. 1, the server memory circuitry 112 stores an asset tracking database 118 and an asset tracking program 403. In some examples, the asset tracking database 118 may store data obtained from the gateways 140, hubs 160, tags 180, and/or sensors 106 of the welding asset tracking system 100. In some examples, the asset tracking database 118 may associate certain data to facilitate reporting, analysis, and/or tracking. For example, data pertaining to welding assets of the same or similar type, at the same or similar location, and/or involved the same or similar operations may be linked and/or associated. In some examples, the asset tracking database 118 may be stored in the server memory circuitry 112 of one asset tracking server 110. In some examples, duplicates of the asset tracking database 118 may be stored across several asset tracking servers 110. In some examples, different portions of the asset tracking database 118 may be stored in several different asset tracking servers 110.

In the example of FIG. 1, the server memory circuitry 112 further stores an asset tracking program 403. In some examples, the asset tracking program 403 may comprise computer (and/or processor) readable (and/or executable) instructions. In some examples, the server processing circuitry 116 may control the operation of the asset tracking server 110 in accordance with the asset tracking program 403. In some examples, the server processing circuitry 116 may comprise one or more processors.

In some examples, the asset tracking program 403 may direct the server processing circuitry 116 to organize and/or store data received via the asset tracking network in the asset tracking database 118. In some examples, the asset tracking program 403 may further direct the asset tracking server(s) 110 to parse and/or query the data in the asset tracking database 118, such as in response to one or more user requests (e.g., received from a terminal and/or other device in communication with the asset tracking server(s) 110). For example, the asset tracking server 110 may receive one or more requests to locate a particular welding asset, a particular welding asset type, welding assets in a particular location, welding assets performing a particular operation, etc. In response, the asset tracking server 110 may parse and/or query the data in asset tracking database 118 to respond to the request.

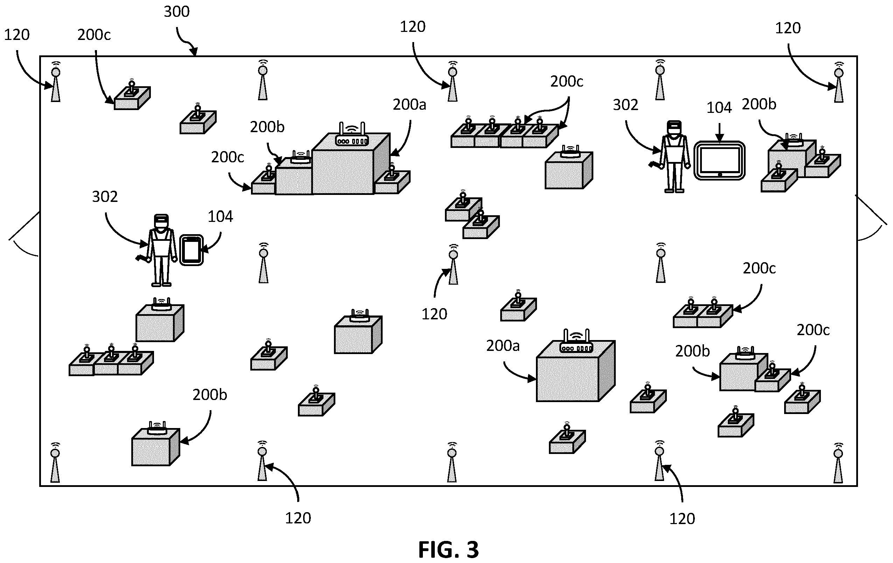

FIG. 3 is a diagram illustrating components of the welding asset tracking system 100 distributed within an example welding area 300. As shown, several gateway retaining welding assets 200a, hub retaining welding assets 200b, and tag retaining welding assets 200c are positioned throughout the welding area 300. A plurality of location beacons 120 are also arranged in a grid like configuration within the welding area 300. In some examples, the grid like configuration may increase the likelihood that there will be at least one location beacon 120 nearby that can be used to determine position. Two welding operators 302 with mobile devices 104 that may operate as gateways 140 are also shown in the welding area 300.

In the example of FIG. 3, there are more tag retaining welding assets 200c than hub retaining welding assets 200b, and more hub retaining welding assets 200b than gateway retaining welding assets 200a. This may reflect a real world situation, and may help illustrate the economics of the welding asset tracking system 100. Using low cost tags 180 with the numerous tag retaining welding assets 200c may help to keep costs manageable. The fewer hub retaining welding assets 200b and gateway retaining welding assets 200a means that fewer pricey hubs 160 are used, and still fewer even pricier gateways 140.

Despite being fewer in number than the tag retaining welding assets 200c (and/or tags 180), the hub retaining welding assets 200b and gateway retaining welding assets 200a (and/or associated hubs 160 and gateways 140) nevertheless form a relatively dense asset tracking network. The majority of tag retaining welding assets 200c (and/or tags 180) are within close proximity to at least one hub retaining welding asset 200b or gateway retaining welding asset 200a. As shown, all the hub retaining welding assets 200b are in proximity to at least one hub retaining welding asset 200b or gateway retaining welding asset 200a. In examples where no gateway 140 is in proximity, a hub 160 may send its data to another hub 160 in proximity, and so on and so forth, until the data arrives at a gateway 140 (or a mobile device 104 or hub 160 with gateway capabilities). The density of the hubs 160 and gateways 140, as well as the mesh like network forwarding capabilities of the hubs 160, may help ensure that data can be relatively consistently collected and/or uploaded to the asset tracking server 110. Further, this density may be representative of real world situations, where often times multiple welding assets 200 are used in relatively close proximity to one another, and rarely is a welding asset 200 left isolated far from other welding assets 200. While the mobile devices 104 operating as gateways 140 may be valuable supplements, such as in those cases where one or more welding assets 200 are isolated, they are not a necessity. Thus, the system can still operate well even if operators 302 with mobile devices 104 are only rarely (or never) in the welding area 300.

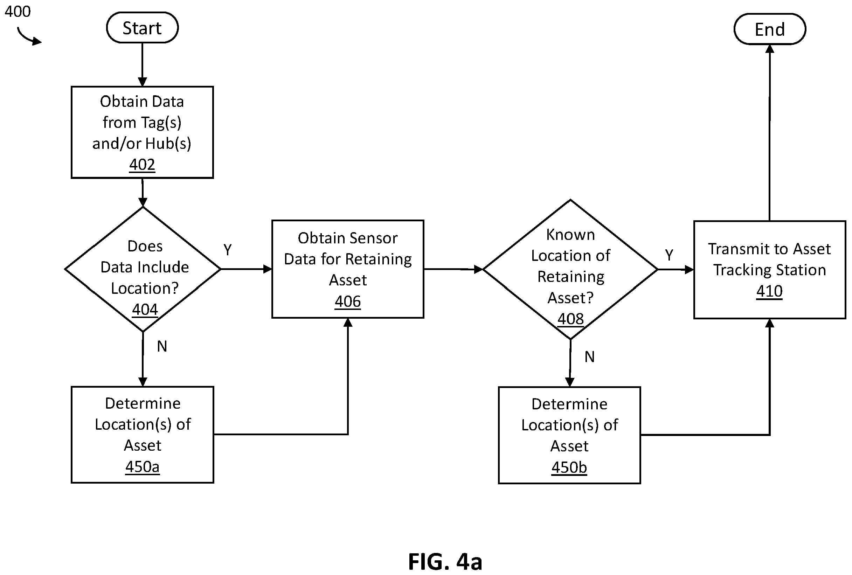

FIG. 4a is a flowchart illustrating an example hub tracking program 400 of the welding asset tracking system 100 of FIG. 1. In some examples, the hub tracking program 400 may be implemented in computer (and/or processor) readable (and/or executable) instructions. While shown as being stored in hub memory circuitry 162, in some examples, the hub tracking program 400 may be implemented in discrete analog and/or digital circuitry. While FIG. 4a is described in terms of the hub tracking program 400, in some examples, the gateway tracking program 401 may operate very similarly to the hub tracking program 400 (except with a gateway 140 and/or gateway retaining welding asset 200a instead of hub 160 and/or hub retaining welding asset 200b). In some examples, portions of the hub tracking program 400 may also be performed by the asset tracking program 403.

In the example of FIG. 4a, the hub tracking program 400 begins at block 402. At block 402, the hub tracking program 400 obtains data from one or more tags 180 and/or hubs 160 in communication range. In some examples, this may comprise reading one or more barcodes 186 and/or matrix barcodes 188 via a barcode scanner 168, communicating with tag communication circuitry 184 via the hub communication circuitry 164, and/or communications between hub communication circuitry 164. In some examples, the tag data obtained from the tags 180 may include sensor data read from one or more sensors 106c of the tag retaining welding asset(s) 200c, one or more identifiers, location data of the welding asset(s) 200c, and/or other data pertaining to the tag(s) 180 and/or welding asset(s) 200c. In some examples, hub data obtained from other hubs 160 may include sensor data read from one or more sensors 106b of the hub retaining welding asset(s) 200b, one or more identifiers, location data of the hub retaining welding asset(s) 200b, tag data obtained by the one or more hubs 160, and/or other data pertaining to the hub(s) 160 and/or welding asset(s) 200b. In some examples, the hub tracking program 400 may only obtain data from, and/or transmit data to, certain (e.g., authorized, paired, grouped, etc.) gateways 140, hubs 160, and/or tags 180.

In the example of FIG. 4a, the hub tracking program proceeds to block 404 after block 402. At block 404, the hub tracking program 400 determines whether the data received at block 402 includes location data for the various tags 180, hubs 160, and/or welding assets 200. In some examples, this determination may comprise parsing the tag data and/or hub data received at block 402. In some examples, this determination may instead be performed at the asset tracking server 110 by the asset tracking program 403.

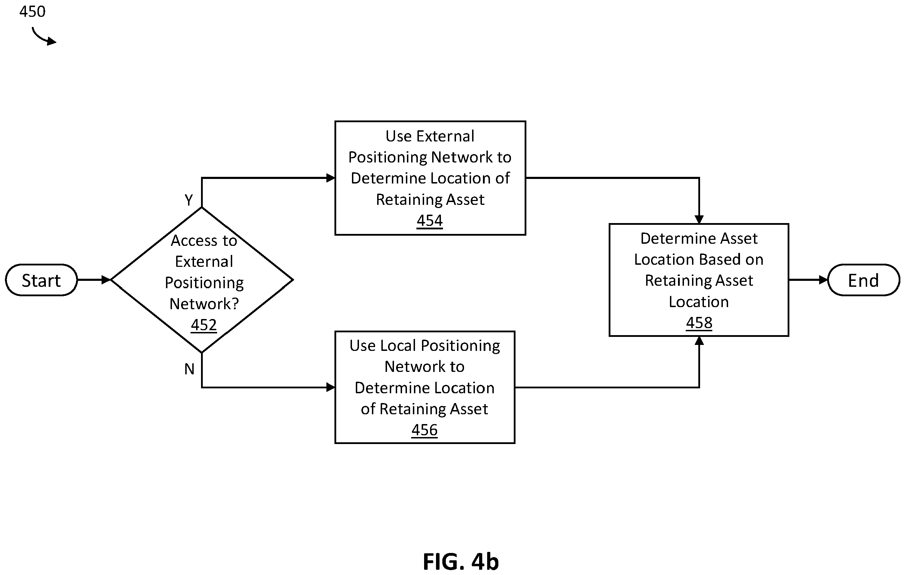

In the example of FIG. 4a, the hub tracking program proceeds to block 450 if there is some missing location data. At block 450, the hub tracking program 400 determines the location of the one or more tag retaining welding assets 200c, tags 180, hub retaining welding assets 200b, and/or hubs 160 from which data was received at block 402. Block 450 is described in more detail below with respect to FIG. 4b. As shown, the hub tracking program 400 proceeds to block 406 if the data received at block 402 is not missing location data, and/or after completion of block 450.

In the example of FIG. 4a, the hub tracking program 400 obtains sensor data from the sensor 106b of the hub retaining asset 200b at block 406. After block 406, the hub tracking program 400 proceeds to block 408. At block 408, the hub tracking program 400 determines whether the location of the hub retaining asset 200b (and/or hub 160) is known. In some examples, this determination may comprise checking the hub memory circuitry 162 to see if a location is stored, checking the hub memory circuitry 162 to see if the asset tracking server 110 knows (and/or stores) the location of the hub retaining asset 200b (and/or hub 160), and/or checking whether block 450a was executed, as execution of block 450a may involve determining the location of the hub retaining asset 200b (and/or hub 160).

In the example of FIG. 4a, the hub tracking program 400 proceeds to block 450b if the location of the hub retaining welding asset 200b is not known. Block 450b is described in detail below with respect to FIG. 4b. In some examples, the determination at blocks 408 and 450b may only occur periodically (e.g., once per predetermined, programmatically determined, or otherwise set time period), rather than every time data is sent to the asset tracking server(s) 110 (and/or gateway(s) 140). In the example of FIG. 4a, if the location of the hub retaining welding asset 200b (and/or hub 160) is known, the hub tracking program 400 proceeds to block 410 where the hub tracking program 400 sends the sensor data and any other data (e.g., tag data, hub data, location data, identifiers) to the asset tracking server 110. In some examples, the data may be sent to the asset tracking server 110 through one or more intervening hubs 160 and/or gateways 140. After block 410, the hub tracking program 400 ends.

FIG. 4b is a flowchart illustrating the determine asset location(s) blocks 450a and 450b of the hub tracking program 400 of FIG. 4a in more detail. As shown, the determine asset location(s) block 450 begins at block 452, where the hub tracking program 400 determines whether the hub communication circuitry 164 is configured to access an external positioning system 108 (e.g., GPS, Wifi, and/or cellular positioning system). If so, the hub tracking program 400 proceeds to block 454 where the position of the hub retaining welding asset 200b (and/or hub 160) is determined via communication with the external positioning system 108. In some examples, the determined position may comprise an approximate position with a radius of uncertainty (e.g., position is within 30 m radius of given latitude/longitude). In some examples, the hub tracking program 400 may also use the local positioning system at block 456 (e.g., to more precisely determine the location).

If the hub tracking program 400 determines the hub communication circuitry is not configured to access an external positioning system 108, the hub tracking program 400 proceeds to block 456. At block 456, the hub tracking program 400 uses the local positioning system to determine a location of the hub retaining welding asset 200b (and/or hub 160). In some examples, this may comprise communicating (e.g., via hub communication circuitry 164) with one or more location beacons 120 in communication range of the hub 160 to obtain the one or more beacon locations 128 corresponding to the one or more location beacons 120. In some examples, the hub tracking program 400 may determine a location of the hub retaining welding asset 200b using the one or more location beacons 120. In some examples, the determined location may comprise an approximate location with a degree of uncertainty (e.g., position is within 30 m radius of given latitude/longitude, position is somewhere within welding cell 10, etc.). In some examples, the degree of uncertainty may be based at least partially on the communication range of the beacon communication circuitry 124 and/or hub communication circuitry 164 (e.g., hub 160 within communication range of beacon location 128). In examples, where more than one location beacons 120 and/or beacon locations 128 are used, the hub tracking program 400 may use trilateration and/or triangulation methods to make the location more precise.

In the example of FIG. 4b, the hub tracking program 400 proceeds to block 458 after block 454 and/or block 456. At block 458, the hub tracking program 400 determines one or more other locations of one or more other welding assets 200. In some examples, the hub tracking program 400 may determine the other locations of the one or more other welding assets 200 based on the determined location of the hub retaining welding asset 200. For example, the hub tracking program 400 may consider the communication range of the tag communication circuitry 184 with which the hub communication circuitry 164 has communicated (and/or the hub communication circuitry 164), and determine that the corresponding tag 180 and/or tag retaining welding asset 200c must be within communication range of the location of the hub 160. As another example, the hub tracking program 400 may determine that the tag data was obtained via the barcode scanner 168, and determine that the corresponding tag 180 and/or tag retaining welding asset 200c must be within a scanning of the barcode scanner 168. In some examples, the hub tracking program 400 may send the determined location(s) (and/or time(s) of the determination(s)) to the welding asset(s) 200 (and/or retained tag(s) 180, hub(s) 160, and/or gateway(s) 140) for storage in memory circuitry, and/or store the location in the hub memory circuitry 162.

In some examples, block 458 may be performed by the asset tracking program 403 rather than the hub tracking program 400. For example, hubs 160 and/or gateways 140 may periodically determine their own locations and send to the asset tracking server 110 (along with their identifier(s)). Thereafter, the asset tracking program 403 may determine which hub 160 and/or gateway 140 obtained which tag data (and/or hub data) and use the last received location of the hub and/or gateway 140 to determine the location of the tag retaining welding asset 200c corresponding to the tag data (and/or hub retaining welding asset 200b corresponding to the hub data). In some examples, (e.g., at block 450b of FIG. 4a), block 458 may be skipped altogether. In the example of FIG. 4b, the determine asset location(s) block 450 of the hub tracking program 400 ends after block 458.

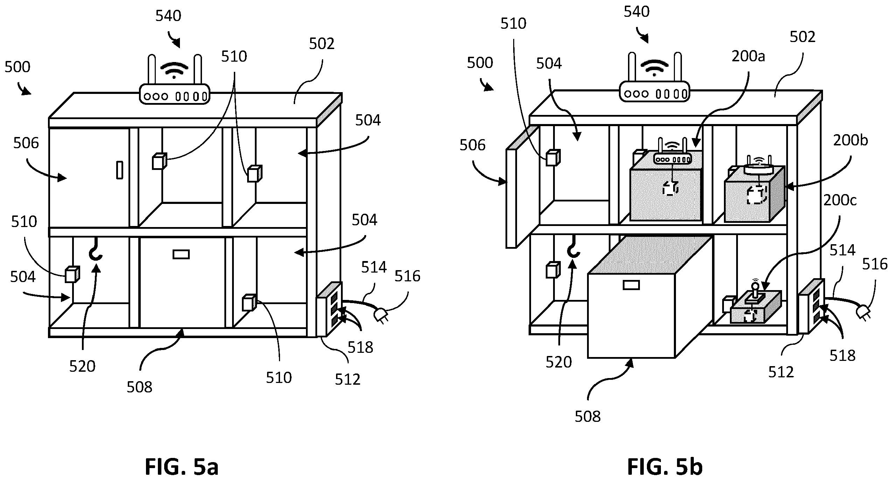

FIGS. 5a and 5b show examples of a welding asset repository 500, according to the present invention, that may be used with the welding asset tracking system 100. In some examples, the welding asset repository 500 may be considered part of the welding asset tracking network. In some examples, the welding asset repository 500 may comprise a locker, rack, crib, and/or other repository in which to store one or more welding assets 200. For example, welding helmets 216 and/or welding wire feeders 208 are sometimes stored in an equipment locker between uses. As another example, PAPRs 218 are sometimes recharged in a repository between uses. As still another example, power supplies 202 are sometimes stored in a rack during and/or between uses. While shown as being stationary in the example of FIGS. 5a and 5b, in some examples, the welding asset repository 500 may be movable, and/or include wheels, tracks, skis, and/or other appropriate devices or mechanisms to provide mobility.

In the examples of FIGS. 5a and 5b, and according to the present invention, the welding asset repository 500 comprises a housing 502 with several receptacles 504 configured to receive one or more welding assets 200. In the example of FIG. 5b, the receptacles 504 retain three welding assets 200. In some
examples, one or more of the welding assets 200 may be physically coupled to the housing 502 when retained in a receptacle 504 (e.g., via one or more screws, bolts, hooks, rails, cords, etc.). In some examples, the receptacles 504 may be configured to retain non-consumable welding assets 200 (e.g., power supplies 202, wire feeders 208, welding helmets 216, PAPRs 218, foot pedals 214, grinders 222, fume extractors 220, etc.).

In the example of FIGS. 5a and 5b, there are six receptacles 504, with each receptacle 504 comprising a cuboid space bounded by five sides (e.g., roof, floor, two sidewalls, and rear wall). In some examples, the receptacle 504 may comprise a differently shaped three dimensional space. In some examples, one or more receptacles 504 may not have a rear wall. In the example of FIG. 5a, four of the receptacles 504 have no front wall, forming cavities or bays recessed within the housing 502. As shown, two of the receptacles 504 do have a front wall; one receptacle 504 includes a door 506 as the front wall (e.g., a door 506 to a locker), while the other receptacle 504 comprises a drawer 508 with a front wall. As shown, one receptacle 504 includes a hook 520, from which a welding asset 200 might be hung.

While one hook 520 is shown in one receptacle 504 in the example of FIGS. 5a and 5b, in some examples, there may be one or more than one hook 520 in one or more receptacles 504, or no hooks in any receptacle 504. While two receptacles 504 are shown with a front wall in the example of FIG. 5a, in some examples all or none of the receptacles 504 may have a front wall (e.g., drawer 508 and/or door 506). While there are six receptacles 504 shown in the examples of FIGS. 5a and 5b, in some examples there may be more less receptacles 504. In some examples, there may simply be one or more large receptacles 504 (e.g., shelves) configured to receive one or more welding assets 200.

In the examples of FIGS. 5a and 5b, and according to the present invention, each receptacle 504 includes a sensor 510 While shown on the sidewalls of the receptacles 504, in some examples one or more of the sensors 510 may be differently positioned (e.g. on, in, and/or attached to the other sidewall, floor, roof, rear wall, front wall, hook 520, etc.). In some examples, one or more of the sensors 510 may be a proximity sensor (e.g., capacitive, inductive, magnetic, photoelectric, laser, infrared, radar, sonar, ultrasonic, fiber optic, etc.), a radio frequency (RF) sensor, an optical sensor, a laser sensor, a camera sensor, an acoustic sensor, a thermal sensor, and/or a weight sensor. In some examples, one or more of the sensors 510 may comprise a socket and/or connection cable, such as for providing electrical power (e.g., for recharging). In such examples, the sensor(s) 510 may additionally comprise a current sensor and/or voltage sensor. In the example of FIGS. 5a and 5b, the sensors 510 are differently positioned within different receptacles 504, such as to accommodate different types of welding assets 200 (e.g., gateway v. hub v. tag retaining welding assets 200). In some examples, sensors 510 within each receptacle 504 may be similarly positioned and/or configured. In some examples, one or more receptacles 504 may include two or more sensors 510, or even no sensors 510 at all.

In the example of FIGS. 5a and 5b, the welding asset repository 500 further includes an electrical junction box 512. As shown, the junction box 512 is in electrical communication with an electrical cable 514 having a plug 516 configured for connection to an electrical outlet. The junction box 512 also includes several sockets 518 configured to electrically connect to one or power cables, such as, for example, power cables connected to one or more welding assets 200. In some examples, the junction box 512 may be configured to electrically connect to one or more welding assets 200 without using the sockets 518. In some examples, welding assets 200 connected to the junction box 512 may be powered and/or recharged. In some examples, welding assets 200 may also be powered and/or recharged wirelessly. In some examples one or more of the sensors 510 may also be connected to and/or powered by the junction box 512.

In the examples of FIGS. 5a and 5b, the welding asset repository 500 retains a repository gateway 540 of the welding asset tracking system 100 (and/or asset tracking network). While shown on top of the repository 500, in some examples, the repository gateway 540 may be retained anywhere on and/or in the repository 500. In some examples, one or more brackets, fasteners, housings, and/or other mechanisms may be used to retain the repository gateway 540 in and/or on the repository 500. In some examples, the repository gateway 540 may be in electrical communication with the junction box 512, such as to receive electrical power, for example. In some examples, the repository gateway 540 may be electrically and/or communicatively coupled to the sensors 510, such as through one or more wired and/or wireless connections (e.g., via gateway communication circuitry). In some examples, the sensors 510 may comprise communication circuitry to effectuate this connection.

In some examples, the repository gateway 540 may have circuitry similar to and/or identical to the other gateways 140 of the welding asset tracking system 100 (e.g., with gateway communication circuitry 544, gateway control circuitry 546, and/or gateway memory circuitry 542). In some examples, the repository gateway 540 retained by the welding asset repository 500 may be configured to obtain data from the gateways 140, hubs 160, and/or tags 180 retained by the welding assets 200 stored in the welding asset repository 500 (e.g., via short range gateway communication circuitry 543, long range gateway communication circuitry 545, and/or wired connection(s) via sensors 510). Thereafter, the repository gateway 540 may send the data to the asset tracking server(s) 110 (e.g., consistent with operation of the gateway tracking program 401). This may come in handy, for example, where the welding asset tracking system 100 has limited (or even no) other gateways 140 (e.g., to lower costs), or where the other gateways 140 cannot access the network 101 and/or asset tracking server(s) 110 (e.g., because of the conditions/interference of the welding area 300, no network 101 connection, etc.). In such examples, the welding asset repository 500 may provide both a convenient place to store welding assets 200 (e.g., between shifts, on break, for maintenance, to recharge, etc.) and an access point through which to propagate data obtained and/or stored by the gateways 140, hubs 160, and/or tags 180 of the welding asset tracking system 100.

In some examples, the repository gateway 540 may be configured to obtain data from gateways 140, hubs 160, and/or tags 180, and/or send the data to the asset tracking server(s) 110, only at, before, after, and/or during a certain time. For example, the repository gateway 540 may be configured (e.g., via instructions stored in gateway memory circuitry 542) to only execute the gateway tracking program 401 (and/or block 410 of the gateway tracking program 401) at, before, after, and/or during a certain time (e.g., before start of first shift, after end of last shift, between 9pm and 2 am, etc.). Such a configuration may assist in preserving energy (especially when repository gateway 540 is battery powered), lowering costs (e.g., by using less energy during peak hours), and/or otherwise improving efficiency. According to the present invention, the repository gateway 540 is configured to only obtain and/or send the data if and when one or more of the sensors 510 detect that a welding asset 200 is actually retained by the welding asset repository 500. In some examples, the repository gateway 540 may be configured to store (e.g., in gateway memory circuitry 142) and/or send (e.g. to the asset tracking server(s) 110) a time corresponding to when one or more of the sensors 510 detect that a welding asset 200 is retained by the welding asset repository 500.

By having welding assets 200 retain the gateways 140, hubs 160, and/or tags 160, the disclosed welding asset tracking system 100 becomes more likely to have the density necessary for more granular tracking due to the tendency of welding assets 200 being positioned near other welding assets 200. Additionally, using devices with varying sophistication levels and/or costs allows the welding asset tracking system 100 to be implemented economically, and according to the sophistication levels, costs, and/or portability of the various welding assets 200. Further, the inclusion of a local positioning system allows the welding asset tracking system 100 to operate even where an external positioning system 108 is unavailable (which may sometimes be the case in certain welding areas). Finally, the welding asset repository 500 provides both a convenient place to store welding assets 200 and an access point through which to propagate data obtained and/or stored by the gateways 140, hubs 160, and/or tags 180 of the welding asset tracking system 100. In this way, the welding asset tracking server may continually receive updated information regarding each welding assets identity, location, and/or use. This updated information may be used by a welding asset manager to locate welding assets, allocate assets to different welding jobs, as well as determine whether assets should be brought in for maintenance and/or whether new assets should be acquired.

The present method and/or system may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present invention has been described with reference to certain implementations, it will be understood by those skilled in the art that various changes may be made and equivalents may be substituted without departing from the scope of the present invention as defined in the appended claims.

## Claims

1. A welding asset repository (500), comprising:
a housing (502) with a plurality of receptacles (504), each receptacle configured to retain a welding asset (200) and each receptacle comprising a sensor (510) configured to detect when the welding asset (200) is retained by the receptacle (504);
an asset data collector (540) configured to collect asset data from each of the welding assets (200) when the sensors (510) detect the welding assets (200) are retained by the receptacles (504); and
communication circuitry configured to transmit the asset data to a welding asset tracking server (110).

2. The repository (500) of claim 1, wherein the welding asset (200) comprises a wire feeder (208), welding power supply (202), welding helmet (216), air purifying respirator (218), welding gun (212), foot pedal (214), or grinder (222).

3. The repository (500) of claim 1, wherein each receptacle (504) comprises a locker, a hook (520), a drawer (508), a bay, or a shelf.

4. The repository (500) of claim 1, wherein the asset data collector comprises communication circuitry configured to communicate via a near field communication, radio frequency identification, or short-wavelength ultra-high frequency protocol.

5. The repository (500) of claim 1, wherein each sensor (510) is a proximity sensor, a radio frequency sensor, an optical sensor, a camera sensor, an acoustic sensor, a thermal sensor, a current sensor, a voltage sensor, a magnetic field sensor, or a weight sensor.

6. A welding system comprising:
a welding asset tracking server (110); and
a welding asset repository (500) according to any one of claims 1 to 5.

7. A method of collecting welding data, comprising:
providing a welding asset repository (500) which comprises a housing (502) with a plurality of receptacles (504), each receptacle comprising a sensor configured to detect when the welding asset is retained by the receptacle;
retaining a welding asset (200) via each receptacle (504) of the welding asset repository (500);
collecting data from each of the welding assets (200) when the welding assets (200) are retained via a data collector of the welding asset repository (500); and
transmitting the data to a welding asset tracking server (110) via communication circuitry of the welding asset repository (500);
wherein collecting data from each of the welding assets (200) when the welding assets (200) are retained comprises collecting data from the welding assets (200) in response to detecting, via the sensors, that the receptacles have retained the welding assets.

8. The method of claim 7, wherein the welding asset (200) comprises a wire feeder (208), welding power supply (202), welding helmet (216), air purifying respirator (218), welding gun (212), foot pedal (214), or grinder (222).

9. The method of claim 7, wherein each receptacle (504) comprises a locker, a hook (520), a drawer (508), a bay, or a shelf.

10. The method of claim 7, wherein collecting data from the welding asset (200) comprises receiving the data from asset communication circuitry of the welding asset (200) at the data collector, the data collector comprising repository communication circuitry.

## Patentansprüche

1. Schweißressourcendepot (500), aufweisend:
ein Gehäuse (502) mit einer Vielzahl von Aufnahmen (504), wobei jede Aufnahme zum Aufbewahren einer Schweißressource (200) konfiguriert ist und jede Aufnahme einen Sensor (510) aufweist, der zum Erkennen konfiguriert ist, wann die Schweißressource (200) von der Aufnahme (504) aufbewahrt wird;
einen Ressourcendatensammler (540), der konfiguriert ist, Ressourcendaten von jeder der Schweißressourcen (200) zu sammeln, wenn die Sensoren (510) die Schweißressourcen (200) erkennen, die von den Aufnahmen (504) aufbewahrt werden; und
einen Kommunikationsschaltkreis, der konfiguriert ist, die Ressourcendaten an einen Schweißressourcen-Verfolgungsserver (110) zu übertragen.

2. Depot (500) nach Anspruch 1, wobei die Schweißressource (200) eine Drahtzuführeinrichtung (208), eine Schweißstromversorgung (202), einen Schweißhelm (216), ein Luftreinigungsatmungsgerät (218), eine Schweißpistole (212), ein Fußpedal (214) oder ein Schleifgerät (222) aufweist.

3. Depot (500) nach Anspruch 1, wobei jede Aufnahme (504) ein Schließfach, einen Haken (520), eine Schublade (508), ein Fach oder ein Regal aufweist.

4. Depot (500) nach Anspruch 1, wobei der Ressourcendatensammler eine Kommunikationsschaltung aufweist, die konfiguriert ist, um über ein Nahfeld-Kommunikations-, Funkfrequenz-Identifikations- oder Kurzwellen-Ultrahochfrequenz-Protokoll zu kommunizieren.

5. Depot (500) nach Anspruch 1, wobei jeder Sensor (510) ein Näherungssensor, ein Hochfrequenzsensor, ein optischer Sensor, ein Kamerasensor, ein akustischer Sensor, ein thermischer Sensor, ein Stromsensor, ein Spannungssensor, ein Magnetfeldsensor oder ein Gewichtssensor ist.

6. Schweißsystem, aufweisend:
einen Schweißressourcen-Verfolgungsserver (110); und
ein Schweißressourcendepot (500) nach einem der Ansprüche 1 bis 5.

7. Verfahren zum Sammeln von Schweißdaten, aufweisend:
Bereitstellen eines Schweißressourcendepots (500), das ein Gehäuse (502) mit einer Vielzahl von Aufnahmen (504) aufweist, wobei jede Aufnahme einen Sensor aufweist, der zum Erkennen konfiguriert ist, wann die Schweißressource von der Aufnahme aufbewahrt wird;
Aufbewahren einer Schweißressource (200) über jede Aufnahme (504) des Schweißressourcendepots (500);
Sammeln von Daten von jeder der Schweißressourcen (200), wenn die Schweißressourcen (200) aufbewahrt werden, über einen Datensammler des Schweißressourcendepots (500); und
Übertragen der Daten an einen Schweißressourcen-Verfolgungsserver (110) über Kommunikationsschaltungen des Schweißressourcendepots (500);
wobei das Sammeln von Daten von jeder der Schweißressourcen (200), wenn die Schweißressourcen (200) aufbewahrt werden, das Sammeln von Daten von den Schweißressourcen (200) in Reaktion auf das Erkennen, über die Sensoren, dass die Aufnahmen die Schweißressourcen aufbewahrt haben, aufweist.

8. Verfahren nach Anspruch 7, wobei die Schweißressource (200) eine Drahtzuführeinrichtung (208), eine Schweißstromversorgung (202), einen Schweißhelm (216), ein Luftreinigungsatmungsgerät (218), eine Schweißpistole (212), ein Fußpedal (214) oder ein Schleifgerät (222) aufweist.

9. Verfahren nach Anspruch 7, wobei jede Aufnahme (504) ein Schließfach, einen Haken (520), eine Schublade (508), ein Fach oder ein Regal aufweist.

10. Verfahren nach Anspruch 7, wobei das Sammeln von Daten von der Schweißressource (200) das Empfangen der Daten von der Ressourcen-Kommunikationsschaltung der Schweißressource (200) an dem Datensammler aufweist, wobei der Datensammler eine Depot-Kommunikationsschaltung aufweist.

## Revendications

1. Dépôt d'élément actif de soudage (500), comprenant :
un logement (502) avec une pluralité de réceptacles (504), chaque réceptacle étant configuré pour retenir un élément actif de soudage (200) et chaque réceptacle comprenant un capteur (510) configuré pour détecter lorsque l'élément actif de soudage (200) est retenu par le réceptacle (504) ;
un collecteur de données d'élément actif (540) configuré pour collecter des données d'élément actif à partir de chacun parmi les éléments actifs de soudage (200) lorsque les capteurs (510) détectent que les éléments actifs de soudage (200) sont retenus par les réceptacles (504) ; et
un circuit de communication configuré pour transmettre les données d'élément actif à un serveur de suivi d'élément actif de soudage (110).

2. Dépôt (500) selon la revendication 1, dans lequel l'élément actif de soudage (200) comprend un dispositif d'alimentation en fil (208), une alimentation électrique de soudage (202), un casque de soudage (216), un respirateur de purification d'air (218), un pistolet de soudage (212), une pédale (214), ou une affuteuse (222).

3. Dépôt (500) selon la revendication 1, dans lequel chaque réceptacle (504) comprend un casier, un crochet (520), un tiroir (508), une baie ou une étagère.

4. Dépôt (500) selon la revendication 1, dans lequel le collecteur de données d'élément actif comprend un circuit de communication configuré pour communiquer via une communication en champ proche, une identification de radiofréquence, ou un protocole d'ultra-haute fréquence à courte longueur d'onde.

5. Dépôt (500) selon la revendication 1, dans lequel chaque capteur (510) est un capteur de proximité, un capteur radiofréquence, un capteur optique, un capteur de caméra, un capteur acoustique, un capteur thermique, un capteur de courant, un capteur de tension, un capteur de champ magnétique ou un capteur de poids.

6. Système de soudage, comprenant :
un serveur de suivi d'élément actif de soudage (110) ; et
un dépôt d'élément actif de soudage (500) selon l'une quelconque des revendications 1 à 5.

7. Procédé de collecte de données de soudage, comprenant :
la fourniture d'un dépôt d'élément actif de soudage (500) qui comprend un logement (502) avec une pluralité de réceptacles (504), chaque réceptacle comprenant un capteur configuré pour détecter lorsque l'élément actif de soudage est retenu par le réceptacle ;
la retenue d'un élément actif de soudage (200) via chaque réceptacle (504) du dépôt d'élément actif de soudage (500) ;
la collecte de données à partir de chacun parmi les éléments actifs de soudage (200) lorsque les éléments actifs de soudage (200) sont retenus via un collecteur de données du dépôt d'éléments actifs de soudage (500) ; et
la transmission des données à un serveur de suivi d'élément actif de soudage (110) via un circuit de communication du dépôt d'élément actif de soudage (500) ;
dans lequel la collecte de données à partir de chacun parmi les éléments actifs de soudage (200) lorsque les éléments actifs de soudage (200) sont retenus comprend la collecte de données à partir des éléments actifs de soudage (200) en réponse à la détection, via les capteurs, que les réceptacles ont retenu les éléments actifs de soudage.

8. Procédé selon la revendication 7, dans lequel l'élément actif de soudage (200) comprend un dispositif d'alimentation en fil (208), une alimentation électrique de soudage (202), un casque de soudage (216), un respirateur de purification d'air (218), un pistolet de soudage (212), une pédale (214), ou une affuteuse (222).

9. Procédé selon la revendication 7, dans lequel chaque réceptacle (504) comprend un casier, un crochet (520), un tiroir (508), une baie ou une étagère

10. Procédé selon la revendication 7, dans lequel la collecte de données à partir de l'élément actif de soudage (200) comprend la réception des données à partir du circuit de communication d'élément actif de l'élément actif de soudage (200) sur le collecteur de données, le collecteur de données comprenant un circuit de communication de dépôt.
